# EUROPÄISCHE PATENTANMELDUNG

(11) **EP 1 400 782 A2**
(43) Veröffentlichungstag der Anmeldung: **24.03.2004**
(21) Anmeldenummer: 03018808.0
(22) Anmeldetag: 19.08.2003
(51) Int. Cl.: G01B 21/04

(54) **Messvorrichtung zum Abtasten einer Nockenbahn**

(30) Priorität: 19.09.2002 DE 20214337 U
(71) Anmelder: ROBERT BOSCH GMBH, 70442 Stuttgart (DE)
(72) Erfinder: Rieger, Hans, 73240 Wendlingen (DE); Mauderer, Günter, 72766 Reutlingen (DE); Friedmann, Jochen, 73230 Kirchheim (DE)

(57) **Zusammenfassung**

Es wird eine Messvorrichtung zum Abtasten einer Nockenbahn mit einer Taststiftanordnung vorgeschlagen. Mittels der Taststiftanordnung wird ein radialer Tastweg in einen axialen Messweg überführt, wobei der axiale Messweg von einer Messuhr (15) angezeigt wird. Dazu ist eine drehbar gelagerte Abtastwelle (10) vorgesehen, in der ein Messtaster (13) radial beweglich geführt ist. In der Abtastwelle (11) ist eine axial geführte Taststange (12) gelagert, die den axialen Messweg auf die Messuhr (15) überträgt.

## Beschreibung

Die Erfindung betrifft eine Messvorrichtung mit einem Messtaster zum Abtasten einer Nockenbahn, insbesondere zur Ermittlung eines Kolbenhubs einer Radialkolbenpumpe nach dem Oberbegriff des Anspruchs 1 .

### Stand der Technik

Radialkolbenpumpen zur Kraftstoffeinspritzung für Brennkraftmaschinen weisen beispielsweise gemäß DE 43 41 424 A1 einen drehfesten Nockenring mit einer innen liegenden Nockenbahn und eine Verteilerwelle mit einer Mehrzahl von Radialbohrungen, in denen Pumpenkolben verschiebbar angeordnet sind, auf. Die Pumpenkolben liegen über in Rollenschuhen gehaltenen Rollen an der Nockenbahn des koaxialen Nockenrings kraftschlüssig an. Die Verteilerwelle ist mit einer Antriebswelle drehfest gekuppelt, so dass das vom Verbrennungsmotor erzeugte Drehmoment auf die Verteilerwelle übertragen wird, wobei dadurch die mit den Rollen in Verbindung stehenden Pumpenkolben entsprechend des Kurvenverlaufs der Nockenbahn eine Hubbewegung ausführen. Die Kupplung zwischen Antriebswelle und Verteilerwelle erfolgt über eine Kupplungsscheibe, die mit radial vorspringenden Kupplungsstegen formschlüssig in Axialschlitze eingreift und beispielsweise in einer Ausnehmung einen Stimzapfen an der Verteilerwelle formschlüssig aufnimmt.

Für Qualitätsüberwachungs- und Reparaturzwecke ist es notwendig, den Kolbenhub der Pumpenkolben zu bestimmen. Aufgrund der kompakten Bauweise und der nur nach innen über die Verteilerwelle zugänglichen Pumpenkolben ist die Bestimmung des Kolbenhubs der Pumpenkolben nicht ohne Demontage der Radialkolbenpumpe möglich.

Aufgabe der vorliegenden Erfindung ist es, eine Messvorrichtung zu schaffen, die eine Bestimmung des Kolbenhubs von innen liegenden Radialkolben ermöglicht, wie dies beispielsweise bei den Radialkolbenhochdruckeinspritzpumpen für Brennkraftmaschinen der Fall ist.

### Vorteile der Erfindung

Die erfindungsgemäße Messvorrichtung mit den kennzeichnenden Merkmalen des Anspruchs 1 hat den Vorteil, dass mit einfachen Mitteln eine Messung des Kolbenhubs von Pumpenkolben in Radialkolbenpumpen möglich ist. Dazu wird die Radialkolbenpumpe geöffnet, so dass ein radial beweglicher Messtaster der Messvorrichtung anstelle des Pumpenkolbens die Nockenbahn des Nockenrings abfahren kann.

Vorteilhafte Weiterbildungen und Verbesserungen der erfindungsgemäßen Messvorrichtung sind mit den Merkmalen der Unteransprüche möglich.

Zur Erzeugung der radialen Bewegung des Messtasters wird eine formschlüssige Kupplung der Abtastwelle der Messvorrichtung mit der Antriebswelle der Radialkolbenpumpe hergestellt.

Besonders vorteilhaft lässt sich die Messvorrichtung zur Bestimmung eines Kolbenhubs eines Pumpenkolbens einer Radialkolbenpumpe einsetzten. Dabei wird der Gehäuseflansch der Messvorrichtung an das Pumpengehäuse angeflanscht und der Messtaster koaxial anstelle des Pumpenkolbens an der Nockenbahn entlanggeführt, wobei der an der Messuhr dargestellte Messweg den Kolbenhub des Pumpenkolbens angibt.

### Zeichnung

Ein Ausführungsbeispiel der Erfindung ist in der Zeichnung dargestellt und in der nachfolgenden Beschreibung näher erläutert.

Es zeigen:
Figur 1 eine Schnittdarstellung durch die erfindungsgemäße Messvorrichtung,
Figur 2 eine Teilschnittdarstellung durch eine Radialkolbenpumpe zur Kraftstoffeinspritzung für Brennkraftmaschinen und
Figur 3 einen Nockenring der Radialkolbenpumpe gemäß Figur 2.

### Ausführungsbeispiel

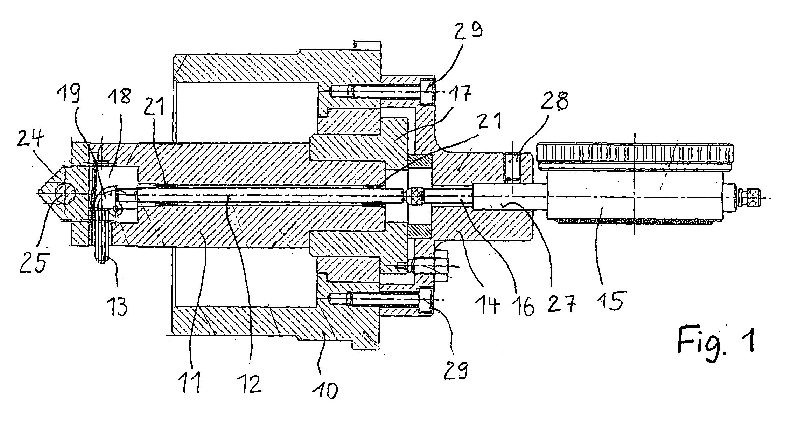

Figur 1 zeigt eine Messvorrichtung, bei der ein radial aufgenommener Tastweg in einen axialen Messweg überführt wird. Dazu weist die Messvorrichtung einen Gehäuseflansch 10, eine Abtastwelle 11, eine Taststange 12, einen Messtaster 13, einen Aufnahmeflansch 14 sowie eine Messuhr 15 auf.

Die Abtastwelle 11 ist im Gehäuseflansch 10 mittels eines Lagers 17 drehbar gelagert. In der Abtastwelle 12 ist eine Aussparung 18 eingebracht, in der ein Übertragungselement 19 angeordnet ist, das eine Übertragung eines vom Messtaster 13 aufgenommenen radialen Tastweges auf die axial gelagerte Taststange 12 ermöglicht. Die Taststange 12 ist dabei in der Abtastwelle 11 mittels zweier Axiallager 21 axial geführt. Die Stirnseite der Abtastwelle 12 ist mit einem Zapfen 24 mit einem Mitnehmerstift 25 versehen.

Der Aufnahmeflansch 14 besitzt eine Aufnahmebohrung 27, in der die Messuhr 15 mit einem Taststift 16 mittels eines Gewindestifts 28 fixiert ist. Der Aufnahmeflansch 14 ist ferner mittels Befestigungsschrauben 29 mit dem Gehäuseflansch 10 verschraubt. Der Taststift 16 der Messuhr 15 sitzt auf der messuhrseitigen Stirnfläche der Taststange 12 auf, so dass die von dem Messtaster 13 aufgenommene und von dem Übertragungselement 19 auf die Taststange 12 übertragene Messbewegung an den Taststift 16 und damit an die Messuhr 15 übergeben wird.

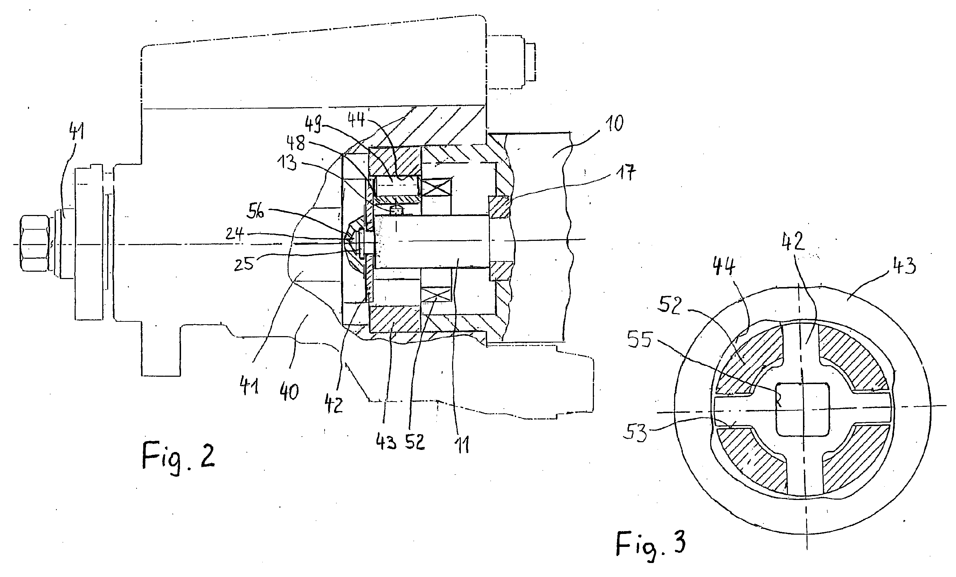

Figur 2 zeigt eine Radialkolbenpumpe der Verteilerbauart im Teilschnitt, die zur Versorgung von mehreren, hier vier Einspritzdüsen eines Dieselmotors mit unter Einspritzdruck stehendem Kraftstoff vorgegebener Zumessung sorgt. Die Radialkolbenpumpe weist ein Pumpengehäuse 40 auf, in dem eine Antriebswelle 41 gelagert ist. Die Antriebswelle 41 besteht über eine Kupplungsscheibe 42 mit einer nicht dargestellten Verteilerwelle in Verbindung, so dass das Drehmoment der Antriebswelle 41 auf die Verteilerwelle übertragbar ist. Die Verteilerwelle ist Teile eines ebenfalls nicht dargestellten Verteilerkörpers. Im Pumpengehäuse 40 befindet sich ferner ein die Antriebswelle 41 und die Verteilerwelle koaxial umgebender, drehfester Nockenring 43, der eine nach innen weisende Nockenbahn 44 aufweist. Die Verteilerwelle und der Verteilerkörper sind deshalb nicht dargestellt, weil vor dem Anbringen der Messvorrichtung an dem Gehäuse 40 sowohl die Verteilerwelle als auch der Verteilerkörper entfernt werden müssen, um Zugang zu Nockenbahn 44 zu erhalten.

Die nicht dargestellte Verteilerwelle enthält beispielsweise vier um gleiche Umfangswinkel zueinander versetzte Radialbohrungen, in welchen jeweils ein radial beweglicher Pumpenkolben geführt ist. An den Pumpenkolben greift jeweils ein Rollenschuh 48 an, in dem eine Rolle 49 gelagert ist. Die Rollenschuhe sind in einem die Verteilerwelle becherartig übergreifenden Kupplungskopf 52 geführt, wobei die Führung der Rollenschuhe 48 von in den Kupplungskopf 52 eingebrachten Axialschlitzen 53 übernommen wird. Die Axialschlitze 53 sind um gleiche Umfangswinkel wie die Radialbohrungen zueinander versetzt angeordnet, so dass die Axialschlitze 53 im Kupplungskopf 52 und die Radialbohrungen in der Verteilerwelle radial fluchten (Figur 3). Der Einspritzdruck wird über die Hubbewegung der Radialkolben erzeugt, die diesen bei Rotation der Verteilerwelle durch die Nockenbahn 44 am Nockenring 43 aufgezwungen wird, wobei die Radialkolben durch den Druck im Pumpenarbeitsraum kraftschlüssig über die Rollenschuhe 48 und Rollen 49 an der Nockenbahn 44 anliegen.

Die aufgrund der Nockenbahn 44 aufgezwungene Hubbewegung der Radialkolben wird mit der vorliegenden Messvorrichtung gemessen. Dazu wird der nicht dargestellte Verteilerkörper mit Verteilerwelle von dem Pumpengehäuse 40 abmontiert, wobei auch alle Rollenschuhe 48 mit Rollen 49 bis auf einen, der in Figur 2 dargestellt ist, entfernt werden. Anstelle des Verteilerkörpers wird die Messvorrichtung mit dem Gehäuseflansch 10 an dem Pumpengehäuse 40 mittel nicht dargestellter Befestigungsschrauben befestigt, wobei die Befestigungsschrauben in die für die Befestigung des Verteilerkörpers vorgesehenen Gewindebohrungen einschraubbar sind.

Beim Anflanschen des Gehäuseflansches 10 an das Pumpengehäuse 40 wird der Zapfen 24 und der Mitnehmerstift 25 durch Ausnehmung 55 in der Kupplungsscheibe 42 geführt und greift in eine Mitnehmeraufnahme 56 der Antriebswelle 41 ein, so dass die Drehbewegung der Antriebswelle 41 auf die Abtastwelle 11 der Messvorrichtung übertragen wird. Dadurch nimmt die Abtastwelle 11 die gleiche Position wie die nicht dargestellte Verteilerwelle ein. Nachdem der Gehäuseflansch 10 am Pumpengehäuse 40 befestigt und der Mitnehmerstift 25 formschlüssig in der Mitnehmeraufnahme 56 der Antriebswelle 41 eingegriffen hat, wird die Messuhr 15 in die Aufnahmebohrung 27 bis zu einem Anschlag am Aufnahmeflansch 14 eingeschoben und mit dem Gewindestift 28 geklemmt. Beim Einschieben der Messuhr 15 greift der Taststift 16 an der Taststange 12 an, der dadurch in axialer Richtung verschoben wird und dabei den Messtaster 13 aus der Abtastwelle 11 schiebt. Dabei wird der Messtaster 13 an den im Kupplungskopf 52 verbliebenen Rollenschuh 48 angepresst.

Bei einer Drehbewegung der Antriebswelle 41 fährt die Rolle 49 mit dem Rollenschuh 48 die Nockenbahn 44 des Nockenrings 43 ab, wobei der Rollenschuh 48 dabei eine radiale Bewegung ausführen. Die Drehbewegung der Antriebswelle 41 wird dabei auch auf die Abtastwelle 11 übertragen, wodurch der Messtaster 13 sich gleichsinnig mit dem in den Axialschlitzen 53 geführten Rollenschuh 48 bewegt. Der radiale Tastweg des Taststiftes 16 wird wie bereits beschrieben über das Übertragungselement 19, die Taststange 12 und den Taststift 16 an die Messuhr 15 weitergeleitet. Der von der Messuhr 15 angezeigte Messweg entspricht dem Kolbenhub des sonst in der Verteilerwelle geführten Pumpenkolbens. Mit dieser Methode können alle Segmente des Nockenringes 43 vom unterer Todpunkt über den oberer Todpunkt bis zum nächsten unteren Todpunkt abgefahren und ausgemessen werden.

Die Anwendung der Erfindung ist nicht auf die beschriebene Radialkolbenpumpe beschränkt. Mit der erfindungsgemäßen Messvorrichtung lassen sich auch andere Nockenbahnen abfahren und deren radialer Hub ermitteln.

## Patentansprüche

1. Messvorrichtung mit einem Messtaster zum Abtasten einer Nockenbahn und mit einer Taststiftanordnung, die einen radiale Tastweg des Messtasters in einen axialen Messweg überführt, wobei der axiale Messweg von einer Messuhr anzeigbar ist, **dadurch gekennzeichnet, dass** eine drehbar gelagerte Abtastwelle (11) vorgesehen ist, in der der Messtaster (13) radial beweglich geführt ist, und dass in der Abtastwelle (11) eine axial geführte Taststange (12) gelagert ist, die den axialen Messweg auf die Messuhr (15) überträgt.

2. Messvorrichtung nach Anspruch 1, **dadurch gekennzeichnet, dass** der in der Abtastwelle (11) radial geführte Messtaster (13) die Drehbewegung der Abtastwelle (11) ausführt.

3. Messvorrichtung nach Anspruch 1, **dadurch gekennzeichnet, dass** die Abtastwelle (11) in einem Gehäuseflansch (10) mittels eines Radiallagers (17) gelagert ist.

4. Messvorrichtung nach Anspruch 1, **dadurch gekennzeichnet, dass** zwischen Messtaster (13) und Taststange (12) ein Übertragungselement (19) angeordnet ist, dass den radialen Tastweg in die axiale Messbewegung überführt.

5. Messvorrichtung nach Anspruch 1, **dadurch gekennzeichnet, dass** ein mit dem Gehäuseflansch (10) verbindbarer Aufnahmeflansch (14) zur Aufnahme der Messuhr (15) vorgesehen ist.

6. Messvorrichtung nach Anspruch 1, **dadurch gekennzeichnet, dass** der Gehäuseflansch (10) an ein Gehäuse (40) einer Radialkolbenpumpe anflanschbar ist, die mindestens einen in einer Welle geführten Pumpenkolben und einen Nockenring (43) mit einer Nockenbahn (44) aufweist, und dass der Messtaster (13) koaxial anstelle des Pumpenkolbens an der Nockenbahn (44) führbar ist, wobei der an der Messuhr (15) dargestellte Messweg den Kolbenhub des Pumpenkolbens angibt.
